# EUROPÄISCHE PATENTSCHRIFT

(11) **EP 2 079 620 B1**
(45) Veröffentlichungstag und Bekanntmachung des Hinweises auf die Patenterteilung: **07.10.2020**
(21) Anmeldenummer: 07788338.7
(22) Anmeldetag: 09.08.2007
(51) Int. Cl.: B60W 20/11, B60K 6/48, B60W 10/02, B60W 10/06, B60W 10/08

(54) **VERFAHREN ZUM BETREIBEN EINES PARALLEL-HYBRIDANTRIEBS**
METHOD FOR OPERATING A PARALLEL HYBRID DRIVE
PROCÉDÉ POUR FAIRE FONCTIONNER UN SYSTÈME DE PROPULSION HYBRIDE À CONFIGURATION EN PARALLÈLE

(30) Priorität: 09.10.2006 DE 102006047655
(43) Veröffentlichungstag der Anmeldung: 22.07.2009
(73) Patentinhaber: Robert Bosch GmbH, 70442 Stuttgart (DE)
(72) Erfinder: FALKENSTEIN, Jens-Werner, 73434 Aalen (DE)
(86) Internationale Anmeldenummer: PCT/EP2007/058276
(87) Internationale Veröffentlichungsnummer: WO 2008/043590

(56) Entgegenhaltungen:
- WO-A-99/21263
- WO-A-03/041989
- DE-A1-102004 039 756
- US-A1- 2004 153 235
- US-A1- 2004 178 756

## Beschreibung

Die Erfindung betrifft ein Verfahren zum Betreiben eines Parallel-Hybridantriebs eines Fahrzeugs, insbesondere eines Kraftfahrzeugs, mit einer elektrischen Maschine und einem Verbrennungsmotor, wobei im Fahrzustand des Fahrzeugs ein Start des Verbrennungsmotors mittels der elektrischen Maschine durch Schließen einer Trennkupplung durchgeführt wird.

### Stand der Technik

Ein derartiges Verfahren zum Betreiben eines Parallel-Hybridantriebs eines Fahrzeugs ist bekannt. Dabei ist das Fahrzeug insbesondere ein Kraftfahrzeug. Der Hybridantrieb eines Fahrzeugs weist dabei einen Antriebstrang aus dem Verbrennungsmotor und mindestens einer elektrischen Maschine auf. Beim Antriebsstrang eines Parallel-Hybridantriebs kann der Verbrennungsmotor mit der elektrischen Maschine über eine von einer Fahrzeugsteuerung beeinflussbare Trennkupplung gekoppelt sein. Damit ist neben den Betriebsarten hybridisches Fahren, Boostbetrieb und Rekuperationsbetrieb auch ein rein elektrisches Fahren möglich. Ein Start des Verbrennungsmotors kann dabei auch während des elektrischen Fahrens erforderlich sein. Dies ist zum Beispiel der Fall, wenn der Fahrer mehr Leistung anfordert als die elektrische Maschine liefern kann oder wenn der Ladezustand eines die elektrische Maschine speisenden elektrischen Speichers zu stark abfällt. Ein Start des Verbrennungsmotors aus dem elektrischen Fahren heraus erfolgt durch schließen der Trennkupplung während der Fahrt, und damit bei drehender elektrischen Maschine und zunächst stillstehendem Verbrennungsmotor. Mit schließen der Trennkupplung erfolgt ein Anschleppen des Verbrennungsmotors, wobei die Winkelgeschwindigkeit der elektrischen Maschine zunächst einbricht. Beim Hochlaufen des Verbrennungsmotors in Folge der ersten Zündungen kann ein Überschwingen der Drehzahl des Verbrennungsmotors entstehen, was zu einer temporären Erhöhung der Winkelgeschwindigkeit der elektrischen Maschine führt. Der Einbruch und die temporäre Erhöhung der Winkelgeschwindigkeit wirkt sich auf den Antriebsstrang aus und beeinträchtigt den Fahrkomfort.

Aus der US 2004/0153235 A1 ist eine Start-Stop-Vorrichtung für ein Hybrid-Fahrzeug bekannt, mit der der Winkel einer Stop-Position des Verbrennungsmotors abgeschätzt werden kann, um die Energie für das Starten des Verbrennungsmotors bei stehendem Fahrzeug durch den elektrischen Starter zu verringern.

Aus der WO 99/21263 A sind eine Vielzahl von hybriden Antriebsstrangstrukturen für Hybrid-Fahrzeuge bekannt, wobei die verschiedenen Antriebsstrangstrukturen mittels einer Nachbildung der Elemente der Antriebsstrangstrukturen in einem Simulationsmodell hinsichtlich ihrer Energieeffizienz bei verschiedenen Fahrsituationen miteinander verglichen werden.

Aus der US 2004/0178756 A1 ist ein Verfahren bekannt, bei dem ein abrufbares Drehmoment eines Elektromotors bestimmt wird in Abhängigkeit von zwei verschiedenen Schätzungen für abrufbare Drehmomente, wobei in die erste Schätzung das verfügbare Drehmoment des Motors bei den aktuellen Betriebsbedingungen eingeht und wobei in die zweite Schätzung die verfügbare Batterieleistung, der Leistungsverbrauch der Batterie und die Drehgeschwindigkeit des Elektromotors eingeht.

### Offenbarung der Erfindung

Das erfindungsgemäße Verfahren sieht vor, dass mindestens eine Betriebsgröße des Parallel-Hybridantriebs erfasst wird und mit einer entsprechenden Modellbetriebsgröße eines Modells des Parallel-Hybridantriebs verglichen wird, wobei das Modell den Verbrennungsmotor nicht umfasst, und dass eine aus dem Vergleich resultierende Abweichung von der elektrischen Maschine zumindest teilweise ausgeglichen wird. Eine derartige Abweichung tritt insbesondere im Fahrzustand des Fahrzeugs durch den einsetzenden Einfluss des Verbrennungsmotors bei dessen Start mittels der elektrischen Maschine auf. Um eine derartige Abweichung -zumindest teilweise- auszugleichen, wird eine solche Betriebsgröße des Parallel-Hybridantriebs erfasst, die mit mindestens einer charakteristischen Größe des Antriebsstrangs, insbesondere der elektrischen Maschine, verbunden ist. Durch Vergleich der Betriebsgröße mit der entsprechenden Modellbetriebsgröße werden Abweichungen von der charakteristischen Größe des Modell-Betriebs ermittelt. Dazu weist das Modell des Parallel-Hybridantriebs den Verbrennungsmotor nicht auf, sodass sich im Modell keine Störung der charakteristischen Größe durch den Start des Verbrennungsmotors ergeben kann. Eine entsprechende Störung des Parallel-Hybridantriebs führt daher zu der Abweichung. Dabei muss die charakteristische Größe selbst nicht gemessen werden, solange die Betriebsgröße eindeutig mit der charakteristischen Größe korreliert.

Insbesondere ist vorgesehen, dass im Fahrzustand des Fahrzeugs ein Stop des Verbrennungsmotors mittels der elektrischen Maschine durch Öffnen der Trennkupplung durchgeführt wird.

Weiterhin ist vorgesehen, dass die von der elektrischen Maschine zumindest teilweise auszugleichende Abweichung eine Abweichung der Betriebsgröße von der Modellbetriebsgröße ist. Die Modellbetriebsgröße gibt dabei den gewünschten Wert der charakteristischen Größe der elektrischen Maschine vor. Die Betriebsgröße ist mit dem realen Betriebszustand der elektrischen Maschine verknüpft, sodass durch die Abweichung der Betriebsgröße von der Modellbetriebsgröße auf eine Abweichung der charakteristischen Größe der elektrischen Maschine von einer charakteristischen Modellgröße geschlossen werden kann. Durch den Ausgleich der Abweichung der Betriebsgröße von der Modellbetriebsgröße kann die elektrische Maschine in einen Betriebszustand gebracht werden, der die charakteristische Größe an die charakteristische Modellgröße - zumindest teilweise - angleicht. Dabei ist die Betriebsgröße insbesondere die charakteristische Größe.

Mit Vorteil ist vorgesehen, dass der Ausgleich durch eine Regelung der Betriebsgröße an die Modellbetriebsgröße erfolgt. Die Betriebsgröße ist der Ist-Wert und die Modellbetriebsgröße der Soll-Wert der Regelung. Die Regelung trifft Maßnahmen (zum Beispiel über ein Stellglied) die für eine Anpassung der Betriebsgröße an die Modellbetriebsgröße sorgt. Die verwendete Regelung ist insbesondere eine Proportional-Regelung (P-Regelung) und/oder eine Proportional-Integral-Regelung (PI-Regelung) und/oder eine Proportional-Integral-Differenzial-Regelung (PID-Regelung). Derartige Regelungen sind durch ein rasches Ausregelverhalten gekennzeichnet. Regelungen mit einem Integralanteil (PI- oder PID-Regelung) gleichen Regelabweichungen zudem vollständig aus.

Weiterhin ist vorgesehen, dass die Betriebsgröße eine Winkelgeschwindigkeit ist. Die Winkelgeschwindigkeit eines der Bauteile des Antriebsstrangs ist eine Betriebsgröße, die direkt oder indirekt (zum Beispiel zusammen mit einer anderen Größe des Antriebsstrangs) die charakteristische Größe des Antriebsstrangs bestimmt.

Erfindungsgemäß ist die Winkelgeschwindigkeit eine Winkelgeschwindigkeit der elektrischen Maschine. Die Winkelgeschwindigkeit der elektrischen Maschine ist damit zum einen die Betriebsgröße und andererseits auch die charakteristische Größe des Antriebsstrangs, die zur Komfortoptimierung an ihren Modellwert angeglichen wird.

Vorteilhafterweise ist vorgesehen, dass mindestens eine weitere Betriebsgröße, insbesondere eine Winkelgeschwindigkeit, als Eingangsgröße in das Modell eingeht. Zur Modellierung des Parallel-Hybridantriebs kann auch eine weitere, Betriebsgröße des Parallel-Hybridantriebs eingehen, die jedoch nicht an einen entsprechenden Modellwert angepasst wird.

Mit Vorteil ist vorgesehen, dass der Hybridantrieb das Fahrzeug über einen Drehmomentwandler antreibt. Der Drehmomentwandler sorgt für eine Anpassung der Momente und Drehzahlen des Verbrennungsmotors und/oder der elektrischen Maschine an eine Antriebswelle und die Räder des Fahrzeugs.

Weiterhin ist vorgesehen, dass der Drehmomentwandler im Modell durch Kennlinien und/oder ein Kennfeld modelliert wird.
Weiterhin ist vorgesehen, dass die weitere Betriebsgröße zur Modellierung des Drehmomentwandlers eingeht. Mit der weiteren Betriebsgröße wird der Betriebspunkt des Drehmomentwandlers im Modell aus den Kennlinien beziehungsweise dem Kennfeld ausgewählt.

Nach einer Weiterbildung der Erfindung ist vorgesehen, dass die weitere Betriebsgröße eine Winkelgeschwindigkeit einer Fahrzeugantriebskomponente oder eine Geschwindigkeit des Fahrzeugs ist.

Nach einer Weiterbildung der Erfindung ist vorgesehen, dass die Regelung zum Ausgleich der Abweichung eine Stellgröße an die elektrische Maschine ausgibt. Die Stellgröße ist zum Beispiel eine Momentanforderung oder eine mit dieser Momentanforderung verknüpfte Größe, die zu Beginn des Starts ein positives Moment von der elektrischen Maschine anfordert. Bringt der Verbrennungsmotor selbstständig ein positives Moment auf, so ist der Startvorgang des Verbrennungsmotors abgeschlossen.

Weiterhin ist vorgesehen, dass die Stellgröße der Regelung bei Abschluss des Starts einen negativen Schwellenwert unterschreitet. Dieser negative Schwellenwert entspricht einer negativen Momentanforderung. Dieses Unterschreiten des Schwellenwertes wird insbesondere zur Erkennung des Abschlusses des Startvorgangs genutzt.

Mit Vorteil ist vorgesehen, dass die Modellierung des Drehmomentwandlers durch Vergleich der Betriebsgröße mit der Modellbetriebsgröße an den Drehmomentwandler angepasst wird. Durch eine derartige Anpassung (Adaption) können Veränderungen der Eigenschaften des realen Drehmomentwandlers berücksichtigt werden.

Die Erfindung betrifft ferner eine Ansteuereinrichtung zur Durchführung des vorstehend erwähnten Verfahrens. Die Ansteuereinrichtung weist Elemente zur Bildung eines Modells des Parallel-Hybridantriebs auf, das den Verbrennungsmotor nicht umfasst. Weiterhin weist die Ansteuereinrichtung eine Vergleichseinrichtung zum Vergleich einer Betriebsgröße des Parallel-Hybridantriebs mit einer entsprechenden Modellbetriebsgröße des Modells und eine Ausgleichseinrichtung zum Ausgleich der resultierenden Abweichung durch die elektrische Maschine auf.

### Kurze Beschreibung der Zeichnungen

Die Zeichnung veranschauliche die Erfindung anhand eines Ausführungsbeispiels, und zwar zeigt:
- Figur 1: eine schematische Darstellung eines Parallel-Hybridantriebs eines Fahrzeugs,
- Figur 2: einen Signalflussplan des Parallel-Hybridantriebs der Figur 1 und
- Figur 3: den Signalflussplan des Parallel-Hybridantriebs mit einer erfindungsgemäßen Ansteuereinrichtung.

### Ausführungsform(en) der Erfindung

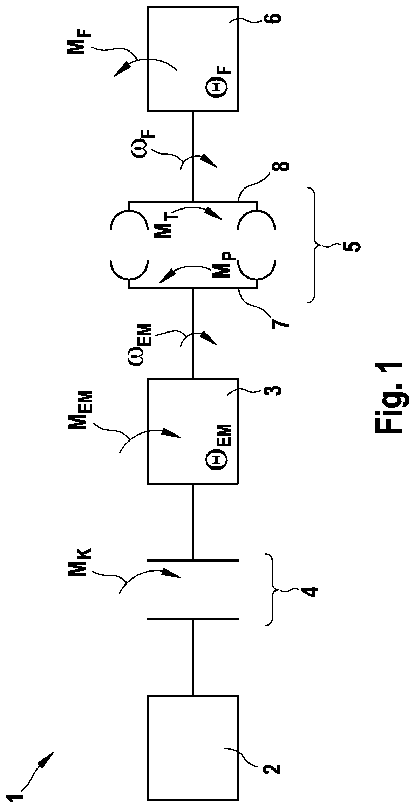

Die Figur 1 zeigt ein vereinfachtes Modell eines parallel-hybridischen Antriebsstrangs 1 mit einem Verbrennungsmotor 2, einer elektrischen Maschine 3 und einer dazwischen liegenden Trennkupplung 4. Die elektrische Maschine 3 treibt über einen Drehmomentwandler 5 und ein nicht explizit dargestelltes Automatikgetriebe und ebenfalls nicht explizit dargestellte Antriebsräder das Fahrzeug an. Die rotatorischen Trägheitsmomente von Teilen des Drehmomentwandlers, des Automatikgetriebes, von Antriebswellen und Rädern, sowie die translatorisch bewegte Fahrzeugmassen (beziehungsweise Fahrzeugträgheit) sind entsprechend den Übersetzungsverhältnissen - umgerechnet auf eine Getriebeeingangswelle- in einer gemeinsamen Fahrzeugantriebskomponente 6 mit einer rotatorischen Fahrzeugersatzdrehmasse F mit dem Trägheitsmoment Θ_{F} zusammengefasst. Die Fahrwiderstandskräfte, wie zum Beispiel Luft-, Roll- und Steigungswiderstand sind in ein auf die Fahrzeugersatzdrehmasse F wirkendes Fahrwiderstandsmoment M_{F} umgerechnet. Der Drehmomentwandler 5 weist ein Pumpenrad 7 und ein Turbinenrad 8 auf, wobei ein Turbinenmoment M_{T} des Turbinenrads auf die Fahrzeugersatzdrehmasse F wirkt.

Die Winkelgeschwindigkeit ω_{F} der Fahrzeugersatzdrehmasse F kann von einer Fahrzeugsteuerung beispielsweise aus der Fahrzeuggeschwindigkeit unter Berücksichtigung der Übersetzungsverhältnisse ermittelt werden. Ein hierzu erforderlicher Geber ist in Figur 1 nicht dargestellt. In einer Elektromaschinen-Drehmasse EM mit einem Trägheitsmoment Θ_{EM} sind das Trägheitsmoment eines Rotors der elektrischen Maschine, sowie die rotatorischen Trägheitsmomente von Teilen des Drehmomentwandlers 5 und der Trennkupplung 4 zusammengefasst. Die Winkelgeschwindigkeit ω_{EM} der Elektromaschinen-Drehmasse EM wird von einem nicht dargestellten Drehzahlgeber ermittelt und einer Fahrzeugsteuerung gemeldet. Auf die Elektromaschinen-Drehmasse EM wirken das Luftspaltdrehmoment M_{EM} der elektrischen Maschine 3, ein für den Antrieb des Drehmomentwandlers 5 erforderliches Pumpenmoment M_{P}, sowie das von der Trennkupplung 4 übertragene Trennkupplungs-Moment M_{K}. Die Steuerung kann das Trennkupplungs-Moment M_{K} durch Öffnen beziehungsweise Schließen der Trennkupplung 4 beeinflussen. Beim elektrischen Fahren ist die Trennkupplung 4 geöffnet und es gilt M_{K} gleich 0. Ein Start des Verbrennungsmotors 2 aus dem elektrischen Fahren heraus erfolgt durch Schließen der Trennkupplung 4 während der Fahrt bei drehender elektrischer Maschine 3 und zunächst stillstehendem Verbrennungsmotor 2. Mit negativem Trennkupplungs-Moment M_{K} ≤ 0 erfolgt ein Anschleppen des Verbrennungsmotors 2, wobei die Winkelgeschwindigkeit der ω_{EM} der Elektromaschinen-Drehmasse EM einbricht.

Beim Hochlaufen des Verbrennungsmotors 2 kann infolge der ersten Zündungen ein Überschwingen der Verbrennungsmotor-Drehzahl entstehen, was zu einer temporären Erhöhung der Winkelgeschwindigkeit ω_{EM} der elektrischen Maschine 3 führt. Beides wirkt sich auf den restlichen Antriebsstrang (Drehmomentwandler 5 und Fahrzeugantriebskomponenten 6) aus und beeinträchtigt den Fahrkomfort. Um den Einbruch beziehungsweise die Erhöhung der Winkelgeschwindigkeit ω_{EM} an der elektrischen Maschine 3 klein zu halten, kann das von der Trennkupplung 4 übertragene Trennkupplungs-Moment M_{K} durch geeignete Ansteuerung der elektrischen Maschine 3 teilweise kompensiert werden. Das von der Trennkupplung 4 übertragene Trennkupplungs-Moment M_{K} kann von der Fahrzeugsteuerung nur ungenau eingestellt beziehungsweise erfasst werden. Dies liegt unter anderem an variierenden Reibkoeffizienten der Kupplungsbeläge, hydraulischen beziehungsweise mechanischen Ungenauigkeiten in der Ansteuerung der Trennkupplung und Signallaufzeiten. Eine vollständige Kompensation (ein vollständiger Ausgleich) ist nicht möglich. Eine Teilkompensation (Teilausgleich) kann mit der hier dargestellten erfindungsgemäßen Vorrichtung und im erfindungsgemäßen Verfahren günstig kombiniert werden. Dies wird aufgrund der einfacheren Darstellung im Folgenden jedoch nicht mehr betrachtet.

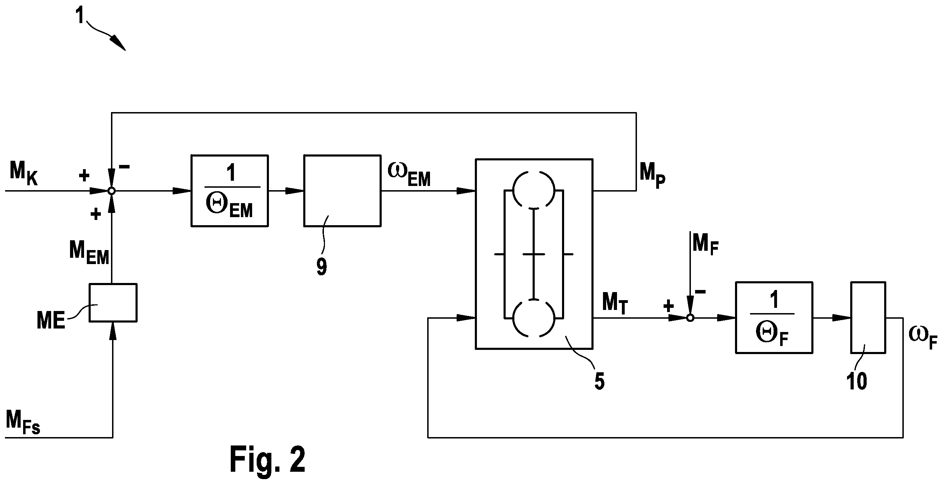

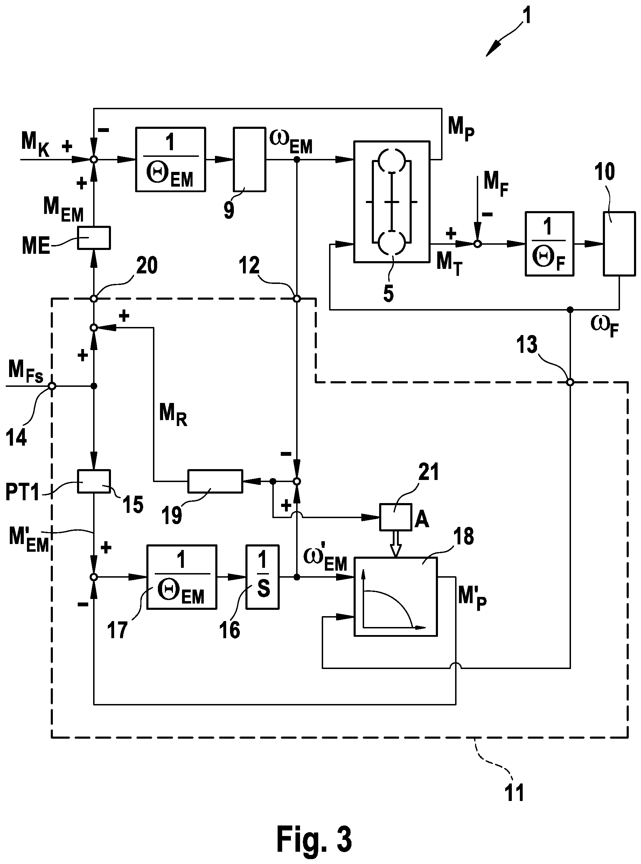

Die Figur 2 zeigt einen Signalflussplan des Antriebsstrangs 1 der Figur 1. Das Pumpenmoment M_{P} und das Turbinenmoment M_{T} des Drehmomentwandlers 5 hängen von der Drehzahl beziehungsweise Winkelgeschwindigkeit des Pumpenrads und des Turbinenrads ab. Das Pumpenrad ist mit der Elektromaschinen-Drehmasse EM gekoppelt und dreht mit der Winkelgeschwindigkeit ω_{EM} der Elektromaschinendrehmasse EM. Das Turbinenrad 8 des Drehmomentwandlers 5 ist mit der Fahrzeugersatzdrehmasse F gekoppelt und rotiert mit der Winkelgeschwindigkeit ω_{F} der Fahrzeugersatzdrehmasse F. Die auf die Elektromaschinendrehmasse EM wirkenden Drehmomente sind: Das von der Trennkupplung 4 übertragene Trennkupplungs-Moment M_{K}, ein Luftspaltdrehmoment M_{EM} der elektrischen Maschine 3 und das beim Antreiben des Drehmomentwandlers 5 rückwirkende Pumpenmoment M_{P} werden summiert und durch das Trägheitsmoment Θ_{EM} der Elektromaschinendrehmasse EM geteilt. Es ergibt sich die Winkelbeschleunigung der Elektromaschinendrehmasse EM aus dem Drallsatz und durch Integration dieses Wertes mittels einem ersten Integrator 9 die Winkelgeschwindigkeit ω_{EM}. Ein entsprechendes Vorgehen führt mittels zweitem Integrator 10 zur Winkelgeschwindigkeit ω_{F} der Fahrzeugersatzdrehmasse F. Das Luftspaltdrehmoment M_{EM} der elektrischen Maschine 3 ergibt sich beim elektrischen Fahren aus einem Fahrerwunschmoment M_{Fs}, das aus der Stellung des Fahrpedals ermittelt wird. Das Fahrerwunschmoment M_{Fs} kann alternativ zum Beispiel auch von einem Fahrerassistenzsystem oder einem ESP-System vorgegeben werden. Das Fahrerwunschmoment M_{Fs} kann gefiltert und/oder in seinem zeitlichen Verlauf geformt sein, um eine Anregung von Drehschwingungen beziehungsweise Lastschläge im Antriebsstrang des Hybridantriebs zu vermeiden. Das Luftspaltdrehmoment M_{EM} folgt dem Fahrerwunschmoment M_{Fs} entsprechend dem Momenten-Anregelverhalten der elektrischen Maschine 3 verzögert, was durch den Block ME im Signalflussplan verdeutlicht wird. Wie aus Figur 2 zu erkennen ist, ergibt sich eine Auswirkung eines von der Trennkupplung 4 übertragenen Momentes M_{K} auf die Winkelgeschwindigkeiten ω_{EM} der Elektromaschinen-Drehmasse EM, die Winkelgeschwindigkeit ω_{F} der Fahrzeugersatzmasse F und auf das Turbinenmoment M_{T}. Das Turbinenmoment M_{T} entspricht dem von dem Drehmomentwandler 5 an das nicht dargestellte Automatikgetriebe und die nicht dargestellten Antriebsräder abgegebenen Moment. Das von der Trennkupplung übertragene Moment M_{K} ändert sich stark während des Motorstarts und stellt eine Störung des Fahrerwunsches dar. Der Antriebsstrang 1 kann dabei zu einem Ruckeln beziehungsweise zu Drehschwingungen angeregt werden. In Figur 3 ist ein Ausführungsbeispiel der Anordnung des Antriebsstrangs mit erfindungsgemäßer Ansteuereinrichtung 11 zur Anwendung des erfindungsgemäßen Verfahrens dargestellt. Im oberen Teil ist der Signalflussplan für den Antriebsstrang 1 aus Figur 1 entsprechend der Figur 2 zu erkennen. Die erfindungsgemäße Ansteuereinrichtung 11 ist im untern Teil der Figur 3 dargestellt. Die erfindungsgemäße Ansteuereinrichtung 11 erhält die gemessenen Winkelgeschwindigkeiten ω_{EM} der Elektromaschinendrehmasse EM über ihren Eingang 12 und die Winkelgeschwindigkeit ω_{F} der Fahrzeugersatzdrehmasse F über ihren Eingang 13. Alternativ dazu kann diese Winkelgeschwindigkeit ω_{F} aus der gemessenen Fahrzeuggeschwindigkeit ermittelt werden. Daneben erhält die Ansteuereinrichtung 11 das Fahrerwunschmoment M_{Fs} über den Eingang 14 und ermittelt mit Hilfe eines Elements 15 mit einem Verzögerungsglied erster Ordnung (PT1-Glied) ein modelliertes Luftspaltdrehmoment M'_{EM}, das sich anhand des Fahrerwunschmomentes M_{Fs} einstellen würde. Das Element 15 mit dem Verzögerungsglied erster Ordnung (PT1) bildet das reale Momentanregelverhalten der elektrischen Maschine 3 nach. Mit Hilfe eines modellierten Pumpenmomentes M'_{P} und eines Integrators 16, sowie eines Verstärkungselementes 17, das den Kehrwert des Trägheitsmomentes Θ_{EM} der Elektromaschinendrehmasse EM als Multiplikationsfaktor enthält, wird eine modellierte Winkelgeschwindigkeit ω'_{EM} ermittelt. Die modellierte Winkelgeschwindigkeit ω'_{EM} entspricht der Winkelgeschwindigkeit ω_{EM} der Elektromaschinendrehmasse EM, solange die Trennkupplung 4 geöffnet ist und das Trennkupplungs-Moment M_{K} null beträgt (zum Beispiel beim elektrischen Fahren). Das modellierte Pumpenmoment M'_{P} wird von der erfindungsgemäßen Steuerung mit Hilfe eines Wandlermodells 18 ermittelt, das im einfachsten Fall aus Kennlinien beziehungsweise einem Kennfeld besteht. Bei Bedarf kann eine Wandlerüberbrückungskupplung, insbesondere wenn diese im Schlupf betrieben wird, im Wandlermodell 18 berücksichtigt sein. Während eines Starts des Verbrennungsmotors 2 entspricht die modellierte Winkelgeschwindigkeit ω'_{EM} der Winkelgeschwindigkeit ω_{EM} der Elektromaschinendrehmasse EM, die sich ohne ein von der Trennkupplung 4 übertragenes Trennkupplungs-Moment M_{K} -das heißt, bei M_{K} = 0 und bei der Winkelgeschwindigkeit ω_{F} der Fahrzeugersatzdrehmasse F- einstellen würde. Ein vorzugsweise als P-, PI- oder PID-Regler ausgebildeter Regler 19 vergleicht die Winkelgeschwindigkeit ω_{EM} der Elektromaschinendrehmasse EM mit der modellierten Winkelgeschwindigkeit ω'_{EM} und ermittelt bei Abweichungen während des Starts des Verbrennungsmotors 2 ein zusätzliches Regler-Moment M_{R} (eine Momentanforderung des Reglers), das zusätzlich über den Ausgang 20 der Ansteuereinrichtung 11 ausgegeben und der elektrischen Maschine 3 aufgeschaltet wird. Damit wird die Abweichung der Winkelgeschwindigkeit ω_{EM} von der modellierten Winkelgeschwindigkeit ω'_{EM} minimiert. Auswirkungen des von der Trennkupplung 4 übertragenen Moments M_{K} auf den Antriebsstrang 1 werden reduziert, was den Fahrkomfort erhöht. Der Regler 19 ist nur während des Starts oder eines Stops des Verbrennungsmotors 2 aktiv, sonst gilt, dass das Regler-Moment M_{R} Null ist (M_{R} = 0). Änderungen des Fahrerwunschmoments M_{Fs} während eines Starts wirken sich auf die modellierte Winkelgeschwindigkeit ω'_{EM} und damit auf die Winkelgeschwindigkeit ω_{EM} der Elektromaschinendrehmasse EM sowie das vom Drehmomentwandler 5 abgegebene Turbinenmoment M_{T} aus. Der Fahrer erhält auch während des Starts ein mit dem elektrisch Fahren vergleichbares Ansprechen auf Änderungen des Fahrerwunschmomentes M_{Fs}.

Beim Start erfolgt zunächst ein Anschleppen des Verbrennungsmotors 2 mit negativem Trennkupplungs-Moment M_{K} (M_{K} < 0), wobei der Regler 19 zunächst ein positives Regler-Moment M_{R} einstellt, um das die elektrische Maschine 3 verzögernde Trennkupplungs-Moment M_{K} auszugleichen. Bei erfolgreichen ersten Verbrennungen erzeugt der Verbrennungsmotor 2 ein Moment aus eigener Kraft. Als Folge gleicht der Regler 19 das vom Verbrennungsmotor erzeugte positive Trennkupplungs-Moment M_{K} (M_{K} > 0) durch ein negatives Regler-Moment M_{R} aus. Der Abschluss des Starts, bei dem der Verbrennungsmotor 2 Leistung an den Antriebsstrang 1 abgibt, kann daran erkannt werden, dass das Drehmoment M_{R} des Reglers 19 eine negative Schwelle unterschreitet. Das Verhalten des Drehmomentwandlers 5 hängt von verschiedenen Einflussfaktoren zum Beispiel der Öltemperatur ab. Beim elektrischen Fahren, also mit geöffneter Trennkupplung 4 (M_{K} = 0), kann daher eine Adaption des Wandlermodells 18 mittels eines Elements 21 durch Vergleich der Winkelgeschwindigkeit ω_{EM} und der modellierten Winkelgeschwindigkeit ω'_{EM} erfolgen. Eine Parameteradaption ist auch beim hybridischen Fahren möglich, falls zusätzlich das Drehmoment und das Trägheitsmoment des Verbrennungsmotors 2 bei der Ermittlung der modellierten Winkelgeschwindigkeit ω'_{EM} berücksichtigt werden.

Im dargestellten Ausführungsbeispiel wird das modellierte Pumpenmoment M'_{P} mit Hilfe eines Wandlermodells 18 ermittelt, dem die gemessene Winkelgeschwindigkeit ω_{F} der Fahrzeugersatzdrehmasse F zugeführt wird. Diese Winkelgeschwindigkeit ω_{F} kann Einflüsse des von der Trennkupplung 4 übertragenen Moments M_{K} enthalten und ist somit nicht Rückwirkungsfrei. Um die Wirkung der erfindungsgemäßen Ansteuerung 11 zu verbessern, kann dem Wandlermodell 18 während des Starts eine modellierte Winkelgeschwindigkeit ω'_{F} der Fahrzeugersatzdrehmasse F zugeführt werden. Diese modellierte Winkelgeschwindigkeit ω'_{F} kann zum Beispiel aus dem vor dem Start gemessenen Verlauf der Winkelgeschwindigkeit ω_{F} prädiziert werden. Alternativ dazu können die modellierte Winkelgeschwindigkeit ω'_{EM} und die modellierte Winkelgeschwindigkeit ω'_{F} zum Beispiel mittels Störgrößenbeobachter ermittelt werden. Die Störgröße ist dabei das Fahrwiderstandsmoment M_{F}.

Die erfindungsgemäße Steuerung kann auch bei einem Stop des Verbrennungsmotors 2 sinnvoll eingesetzt werden. Insbesondere dann, wenn der Verbrennungsmotor 2 ein Trennkupplungsmoment M_{K} ungleich Null erzeugt, das beim Öffnen der Trennkupplung 4 schnell wegfällt, zum Beispiel wenn der Verbrennungsmotor 2 sich während des Öffnens der Trennkupplung 4 in der Schubabschaltung befindet. Dann wird das vom Verbrennungsmotor 2 vor Öffnen der Trennkupplung 4 übertragene Trennkupplungsmoment M_{K} (M_{K} ≠ 0) im Modell berücksichtigt. Während das reale Trennkupplungsmoment M_{K} bei entsprechend schnellem Öffnen der Trennkupplung 4 schnell auf Null zurückgeht, kann zu Berechnung der modellierten Winkelgeschwindigkeit ω'_{EM} ein modifiziertes Trennkupplungsmoment M'_{K} benutzt werden, das langsamer auf Null zurückgeht und somit den Verlauf der modellierten Winkelgeschwindigkeit ω'_{EM} glättet. Durch die Wirkung des Reglers 19 wird der Verlauf der Winkelgeschwindigkeit ω_{EM} ebenfalls geglättet, wodurch komfortmindernde schnelle Änderungen im Turbinenmoment M_{T} vermieden werden. Damit erfolgen keine Anregungen von Drehschwingungen oder Ruckeln im Abtriebsstrang 1. Alternativ dazu kann das beim Öffnen der Trennkupplung 4 wegfallende Trennkupplungsmoment M_{K} von der elektrischen Maschine 3 kompensiert werden. Für die Berechnung der modellierten Winkelgeschwindigkeit ω'_{EM} wird von einer idealen Kompensation ausgegangen, Störungen in der Winkelgeschwindigkeit ω_{EM} aufgrund der realen, nicht idealen Kompensation werden vom Regler 19 minimiert. Auswirkungen auf den Antriebsstrang 1 werden so minimiert, was den Fahrkomfort verbessert.

Die Winkelgeschwindigkeit ω_{EM} der Elektromaschinen-Drehmasse EM ist die Betriebsgröße des Parallel-Hybridantriebs. Die entsprechende Modellbetriebsgröße ist die modellierte Winkelgeschwindigkeit ω'_{EM}. Die von der elektrischen Maschine 3 zumindest teilweise auszugleichende Abweichung ist eine Abweichung der Betriebsgröße ω_{EM} von der Modellbetriebsgröße ω'_{EM}. Eine weitere Betriebsgröße, die in das Modell eingeht, ist die Winkelgeschwindigkeit ω_{F} der Fahrzeugersatzdrehmasse F. Die charakteristische Größe ist in diesem Ausführungsbeispiel gleich der Betriebsgröße ω_{EM}. Allgemein ist es jedoch möglich, dass diese beiden Größen (charakteristische Größe und Betriebsgröße) lediglich eindeutig mit einander verknüpfte Größen sind.

## Patentansprüche

1. Verfahren zum Betreiben eines parallel-hybridischen Antriebsstrangs (1) eines Fahrzeugs mit einer elektrischen Maschine (3) und einem Verbrennungsmotor (2) sowie einer dazwischen liegenden Trennkupplung (4),
wobei die elektrische Maschine (3) und der Verbrennungsmotor (2) über die Trennkupplung (4) wirkverbindbar sind,
wobei die elektrische Maschine (3) allein oder mit dem Verbrennungsmotor (2) zusammen
das Fahrzeug über einen Drehmomentwandler (5) mit einem Pumpenrad und mit einem Turbinenrad antreibt,
wobei im Fahrzustand des Fahrzeugs aus einem elektrischen Fahren heraus, in welchem Fahrzustand ausschließlich die elektrische Maschine (3) die Antriebsräder des Fahrzeugs antreibt und die Trennkupplung (4) geöffnet ist, ein Start des zunächst stillstehenden Verbrennungsmotors (2) mittels der drehenden elektrischen Maschine (3) durch Schließen der Trennkupplung (4) während der Fahrt durchgeführt wird,
wobei mindestens eine Winkelgeschwindigkeit (ω_{EM}) der elektrischen Maschine (3) als Ist-Wert erfasst wird,
mit einem einer modellierten Winkelgeschwindigkeit (ω'_{EM}) der elektrischen Maschine (3) entsprechenden Soll-Wert eines Modells des parallel-hybridischen Antriebsstrangs (1) verglichen wird,
wobei das Modell des parallel-hybridischen Antriebsstrangs (1) den Verbrennungsmotor (2) nicht umfasst, so dass sich im Modell des parallel-hybridischen Antriebsstrangs (1) keine Störung einer charakteristischen Größe der elektrischen Maschine (3) durch den Start des Verbrennungsmotors (2) ergeben kann, wobei die Winkelgeschwindigkeit (ω_{EM}) der elektrischen Maschine (3) zum einen eine Betriebsgröße und andererseits auch eine charakteristische Größe des parallel-hybridischen Antriebsstrangs (1) ist,
wobei der Vergleich mittels eines Reglers (19) erfolgt, wobei der Regler (19) bei Abweichungen zwischen der Winkelgeschwindigkeit (ωEM) der elektrischen Maschine (3) und der modellierten Winkelgeschwindigkeit (ωEM) der elektrischen Maschine (3) während des Starts des Verbrennungsmotors (2) ein zusätzliches Regler-Moment (MR) ermittelt, das der elektrischen Maschine (3) aufgeschaltet wird, so dass die Abweichung der Winkelgeschwindigkeit (ωEM) der elektrischen Maschine (3) von der modellierten Winkelgeschwindigkeit (ω'EM) der elektrischen Maschine (3) minimiert wird,
**dadurch gekennzeichnet, dass** der Drehmomentwandler (5) in einem Wandlermodell (18) durch Kennlinien und/oder ein Kennfeld modelliert wird,
wobei eine Winkelgeschwindigkeit (ω_{F}) einer Fahrzeugantriebskomponente oder eine Geschwindigkeit des Fahrzeugs und die modellierte Winkelgeschwindigkeit (ω'_{EM}) der elektrischen Maschine (3) zur Nachbildung des Drehmomentwandlers (5) als Eingangsgrößen in das Wandlermodell (18) eingehen,
wobei mittels des Wandlermodells (18) ein modelliertes Pumpenmoment (M'_{P}) ermittelt wird,
wobei mit Hilfe des modellierten Pumpenmomentes (M'_{P}) sowie eines Fahrerwunschmoments (M_{F}) die modellierte Winkelgeschwindigkeit (ω'_{EM}) der elektrischen Maschine (3) ermittelt wird.

2. Verfahren nach Anspruch 1, **dadurch gekennzeichnet, dass** im Fahrzustand des Fahrzeugs ein Stop des Verbrennungsmotors (2) mittels der elektrischen Maschine (3) durch Öffnen der Trennkupplung (4) durchgeführt wird.

3. Verfahren nach einem der vorhergehenden Ansprüche, **dadurch gekennzeichnet, dass** der Ausgleich durch eine Regelung der Winkelgeschwindigkeit (ω_{EM}) der elektrischen Maschine (3) an die modellierten Winkelgeschwindigkeit (ω'_{EM}) der elektrischen Maschine (3) zur Komfortoptimierung erfolgt.

4. Verfahren nach einem der vorhergehenden Ansprüche, **dadurch gekennzeichnet, dass** mindestens eine weitere Betriebsgröße, insbesondere eine Winkelgeschwindigkeit, als Eingangsgröße in das Modell eingeht.

5. Verfahren nach Anspruch 4, **dadurch gekennzeichnet, dass** die weitere Betriebsgröße zur Modellierung des Drehmomentwandlers (5) eingeht.

6. Verfahren nach Anspruch 3 und einem der sechs vorhergehenden Ansprüche, **dadurch gekennzeichnet, dass** die Regelung zum Ausgleich der Abweichung eine Stellgröße an die elektrische Maschine (3) ausgibt.

7. Verfahren nach dem vorhergehenden Anspruch, **dadurch gekennzeichnet, dass** die Stellgröße der Regelung bei Abschluss des Starts einen negativen Schwellenwert unterschreitet.

8. Verfahren nach Anspruch 6 und einem der fünf vorhergehenden Ansprüche, **dadurch gekennzeichnet, dass** die Modellierung des Drehmomentwandlers (5) durch Vergleich der Betriebsgröße mit der Modellbetriebsgröße an den Drehmomentwandler (5) angepasst wird.

9. Ansteuereinrichtung (11) eines parallel-hybridischen Antriebsstrangs (1) mit einer elektrischen Maschine (3) und einem Verbrennungsmotor (2) sowie einer dazwischen liegenden Trennkupplung (4), wobei die elektrische Maschine (3) allein oder mit dem Verbrennungsmotor (2) zusammen das Fahrzeug über einen Drehmomentwandler (5) mit einem Pumpenrad und mit einem Turbinenrad antreibt, **dadurch gekennzeichnet, dass** die Ansteuereinrichtung (11) geeignet ist, die Schritte des Verfahrens nach mindestens einem der vorhergehenden Ansprüche 1 bis 8 auszuführen.

## Claims

1. Method for operating a parallel-hybrid drivetrain (1) of a vehicle having an electric machine (3) and an internal combustion engine (2) and a separating clutch (4) situated in between, wherein the electric machine (3) and the internal combustion engine (2) are operatively connectable by means of the separating clutch (4), wherein the electric machine (3) alone, or together with the internal combustion engine (2), drives the vehicle via a torque converter (5) with a pump impeller and with a turbine impeller, wherein, in the driving state of the vehicle, proceeding from electric driving, in which driving state exclusively the electric machine (3) drives the drive wheels of the vehicle and the separating clutch (4) is open, a start of the initially shut-down internal combustion engine (2) is performed by means of the rotating electric machine (3) by closure of the separating clutch (4) during travel, wherein at least an angular speed (ω_{EM}) of the electric machine (3) is acquired as an actual value and is compared with a setpoint value, corresponding to a modelled angular speed (ω'_{EM}) of the electric machine (3), of a model of the parallel-hybrid drivetrain (1), wherein the model of the parallel-hybrid drivetrain (1) does not include the internal combustion engine (2), such that, in the model of the parallel-hybrid drivetrain (1), no disturbance of a characteristic variable of the electric machine (3) can arise from the starting of the internal combustion engine (2), wherein the angular speed (ω_{EM}) of the electric machine (3) is both an operating variable and also a characteristic variable of the parallel-hybrid drivetrain (1), wherein the comparison is performed by means of a closed-loop controller (19), wherein the closed-loop controller (19), in the event of deviations between the angular speed (ω_{EM}) of the electric machine (3) and the modelled angular speed (ω'_{EM}) of the electric machine (3) during the starting of the internal combustion engine (2), ascertains an additional closed-loop controller torque (MR) which is applied to the electric machine (3), such that the deviation between the angular speed (ω_{EM}) of the electric machine (3) and the modelled angular speed (ω'_{EM}) of the electric machine (3) is minimized,
**characterized in that** the torque converter (5) is modelled in a converter model (18) by means of characteristic curves and/or a characteristic map, wherein an angular speed (ω_{F}) of a vehicle drive component or a speed of the vehicle and the modelled angular speed (ω'_{EM}) of the electric machine (3) are input as input variables into the converter model (18) for the purposes of replicating the torque converter (5), wherein a modelled pumping torque (M'_{P}) is ascertained by means of the converter model (18), wherein the modelled angular speed (ω'_{EM}) of the electric machine (3) is ascertained with the aid of the modelled pumping torque (M'_{P}) and a driver demand torque (M_{F}).

2. Method according to Claim 1,
**characterized in that**, in the driving state of the vehicle, a stoppage of the internal combustion engine (2) by means of the electric machine (3) is performed by opening of the separating clutch (4).

3. Method according to either of the preceding claims, **characterized in that** the compensation by closed-loop control of the angular speed (ω_{EM}) of the electric machine (3) to the modelled angular speed (ω'_{EM}) of the electric machine (3) is performed for the purposes of optimizing comfort.

4. Method according to any of the preceding claims, **characterized in that** at least one further operating variable, in particular an angular speed, is input as input variable into the model.

5. Method according to Claim 4, **characterized in that** the further operating variable is input for the purposes of modelling the torque converter (5).

6. Method according to Claim 3 and any of the five preceding claims, **characterized in that** the closed-loop control for the compensation of the deviation outputs a an actuating variable to the electric machine (3).

7. Method according to the preceding claim, **characterized in that** the actuating variable of the closed-loop control falls below a negative threshold value upon completion of the starting process.

8. Method according to Claim 6 and any of the five preceding claims, **characterized in that** the modelling of the torque converter (5) is adapted to the torque converter (5) by comparison of the operating variable with the modelled operating variable.

9. Control device (11) of a parallel-hybrid drivetrain (1) of a vehicle having an electric machine (3) and an internal combustion engine (2) and a separating clutch (4) situated in between, wherein the electric machine (3) alone, or together with the internal combustion engine (2), drives the vehicle via a torque converter (5) with a pump impeller and with a turbine impeller, **characterized in that** the control device (11) is suitable for carrying out the steps of the method according to at least one of the preceding Claims 1 to 8.

## Revendications

1. Procédé pour faire fonctionner un groupe motopropulseur hybride parallèle (1) d'un véhicule, comprenant une machine électrique (3) et un moteur à combustion interne (2) ainsi qu'un embrayage de séparation (4) interposé,
dans lequel la machine électrique (3) et le moteur à combustion interne (2) peuvent être reliés activement par l'intermédiaire de l'embrayage de séparation (4),
dans lequel la machine électrique (3) entraîne seule ou conjointement avec le moteur à combustion interne (2) le véhicule par l'intermédiaire d'un convertisseur de couple (5) muni d'une roue de pompe et d'une roue de turbine,
dans lequel, à l'état de marche du véhicule partant d'une conduite électrique, dans cet état de marche seule la machine électrique (3) entraînant les roues motrices du véhicule et l'embrayage de séparation (4) étant ouvert, un démarrage du moteur à combustion interne (2), d'abord à l'arrêt, est effectué au moyen de la machine électrique (3) tournante en fermant l'embrayage de séparation (4) pendant la conduite,
dans lequel au moins une vitesse angulaire (ω_{EM}) de la machine électrique (3) est acquise comme une valeur réelle et comparée à une valeur de consigne d'un modèle du groupe motopropulseur hybride parallèle (1) qui correspond à une vitesse angulaire modélisée (ω'_{EM}) de la machine électrique (3),
dans lequel le modèle du groupe motopropulseur hybride parallèle (1) ne comprend pas le moteur à combustion interne (2) de sorte que dans le modèle du groupe motopropulseur hybride parallèle (1) aucune interférence d'une grandeur caractéristique de la machine électrique (3) ne peut être occasionnée par le démarrage du moteur à combustion interne (2), la vitesse angulaire (ω_{EM}) de la machine électrique (3) étant d'une part une grandeur de fonctionnement et d'autre part aussi une grandeur caractéristique du groupe motopropulseur hybride parallèle (1),
dans lequel la comparaison est effectuée au moyen d'un régulateur (19), le régulateur (19), en cas d'écarts entre la vitesse angulaire (ω_{EM}) de la machine électrique (3) et la vitesse angulaire modélisée (ω'_{EM}) de la machine électrique (3), déterminant pendant le démarrage du moteur à combustion interne (2) un moment de régulateur supplémentaire (MR) qui est appliqué à la machine électrique (3) de façon à minimiser l'écart de la vitesse angulaire (ω_{EM}) de la machine électrique (3) par rapport à la vitesse angulaire modélisée (ω'_{EM}) de la machine électrique (3),
**caractérisé en ce que** le convertisseur de couple (5) est modélisé dans un modèle de convertisseur (18) par des courbes caractéristiques et/ou un champ caractéristique, une vitesse angulaire (ω_{F}) d'un composant d'entraînement de véhicule ou une vitesse du véhicule et la vitesse angulaire modélisée (ω'_{EM}) de la machine électrique (3) entrant dans le modèle de convertisseur (18) sous forme de grandeurs d'entrée pour simuler le convertisseur de couple (5), le modèle de convertisseur (18) permettant de déterminer un moment de pompage modélisé (M'_{P}), le moment de pompage modélisé (M'P) ainsi qu'un moment souhaité par le conducteur (MF) permettant de déterminer la vitesse angulaire modélisée (ω'_{EM}) de la machine électrique (3).

2. Procédé selon la revendication 1, **caractérisé en ce qu'**à l'état de marche du véhicule, un arrêt du moteur à combustion interne (2) est effectué au moyen de la machine électrique (3) par l'ouverture de l'embrayage de séparation (4).

3. Procédé selon l'une quelconque des revendications précédentes, **caractérisé en ce que** la compensation est effectuée par une régulation de la vitesse angulaire (ω_{EM}) de la machine électrique (3) selon la vitesse angulaire modélisée (ω'_{EM}) de la machine électrique (3) afin d'optimiser le confort.

4. Procédé selon l'une quelconque des revendications précédentes, **caractérisé en ce qu'**au moins une grandeur de fonctionnement supplémentaire, en particulier une vitesse angulaire, entre dans le modèle en tant que grandeur d'entrée.

5. Procédé selon la revendication 4, **caractérisé en ce que** la grandeur de fonctionnement supplémentaire entre dans la modélisation du convertisseur de couple (5) .

6. Procédé selon la revendication 3 et l'une des cinq revendications précédentes, **caractérisé en ce que** la régulation fournit une grandeur de réglage à la machine électrique (3) pour compenser l'écart.

7. Procédé selon la revendication précédente, **caractérisé en ce que** la grandeur de réglage de la régulation soupasse une valeur seuil négative à l'issue du démarrage.

8. Procédé selon la revendication 6 et l'une des cinq revendications précédentes, **caractérisé en ce que** la modélisation du convertisseur de couple (5) est adaptée au convertisseur de couple (5) en comparant la grandeur de fonctionnement à la grandeur de fonctionnement du modèle.

9. Dispositif de pilotage (11) d'un groupe motopropulseur hybride parallèle (1) comprenant une machine électrique (3) et un moteur à combustion interne (2) ainsi qu'un embrayage de séparation (4) interposé, dans lequel la machine électrique (3) entraîne seule ou conjointement avec le moteur à combustion interne (2) le véhicule par l'intermédiaire d'un convertisseur de couple (5) muni d'une roue de pompe et d'une roue de turbine, **caractérisé en ce que** le dispositif de pilotage (11) est adapté pour effectuer les étapes du procédé selon au moins l'une des revendications précédentes 1 à 8.
